# EUROPEAN PATENT APPLICATION

(11) **EP 4 765 356 A1**
(43) Date of publication of application: **24.06.2026**
(21) Application number: 25225855.3
(22) Date of filing: 19.12.2025
(51) Int. Cl.: H01M 50/103, H01M 50/249, H01M 50/533, H01M 50/548, H01M 50/55, H01M 50/553, H01M 10/04

(54) **PRISMATIC TYPE BATTERY CELL, BATTERY PACK AND ROAD VEHICLE**

(30) Priority: 20.12.2024 IT 202400029436
(71) Applicant: FERRARI S.p.A., 41100 Modena (IT)
(72) Inventor: DAGLI, Hilmi Daghan, 41100 MODENA (IT); SHANG, Congcong, 41100 MODENA (IT)
(74) Representative: Studio Torta S.p.A.

(57) **Abstract**

Prismatic type battery cell (6) comprising: box-shaped metal case (9), which, in turn, comprises a first base wall (11) and a second base wall (12), opposite one another along a longitudinal axis (L) of the cell; a stack (10) comprising a plurality of electrode plates (19) alternating with each other and interspaced by separator material foils; wherein the electrode plates (19) are alternately anode plates (20) and cathode plates (21), which extend lengthwise along the longitudinal axis (L) and widthwise along a transverse axis (T), perpendicular to the longitudinal axis (L), respectively; wherein the anode plates (20) project, along the longitudinal (L) axis, first metal terminal elements (22) toward the first base wall (11); the cathode plates (21) project, along the longitudinal (L) axis, in the opposite direction relative to the first metal terminal elements (22), second metal terminal elements (23) toward the second base wall (12); the second metal terminal elements (23) extend across the entire width of the cathode plates (21).

## Description

### CROSS-REFERENCE TO RELATED APPLICATIONS

This patent application claims priority from Italian patent application no. 102024000029436 filed on December 20, 2024, the entire disclosure of which is incorporated herein by reference.

### TECHNICAL FIELD

The invention relates to a prismatic battery cell, which is normally used to form a battery module containing a plurality of prismatic cells, which are aligned in a row, for the transport industry, for example for electric motor vehicles and hybrid motor vehicles with combustion/electric drive.

In particular, the invention can advantageously, though not exclusively be applied to a high-performance electric (or hybrid) road vehicle, to which explicit reference will be made in the description below without because of this lacking generality.

### BACKGROUND OF THE INVENTION

As it is known, electric or hybrid vehicles comprise battery packs and the latter each consist of a plurality of electrical energy storage modules, commonly referred to as "battery modules", arranged in positions close/adjacent to one another within a support structure. In turn, each battery module comprises a case and a plurality of battery cells, arranged in said case in side-by-side positions so as to form a row or a block.

For prismatic battery cells, each battery cell is provided with a metal shell (usually referred to as *can*) with a parallelepiped shape, generally made of aluminium, having an upper side from which two electrical connectors protrude, defining the two electrical poles of the battery respectively, namely anode and cathode. The two electrical connectors are electrically insulated from one another, and also with respect to the battery cell shell, and are electrically connected in series to the adjacent battery cells, in the same battery module, by means of connection elements (sometimes referred to as "*current collectors*").

In particular, each cell comprises electrode plates shaped by means of a notching process, usually laser or mechanical notching, so as to expose small-sized terminal tabs aligned with one another, which are usually welded to one another and subsequently to the connection elements (with a greater thickness), which, in turn, are already welded to the exposed electrical connectors of the battery cell. The latter are then connected so as to supply the expected electrical voltage, on the outside of the case of the battery module.

This type of cells has several drawbacks. First of all, the presence of the tabs makes the precision in the stacking of the electrode plates essential. Furthermore, the presence of the tab itself determines an increase in the electrical resistance of the cell, with a consequent increase in temperature.

Each battery cell is also provided with a safety valve (or, in any case, with a preferential breaking zone to define an opening in case of need for venting), configured so as to limit the pressure in the event of a possible emission of gas into the respective shell, for example in case of thermal instability. The safety valve is usually arranged on the upper side of the shell, in an intermediate position between the two electrical connectors. The gases vented through the safety valve occupy an upper volume of the battery module and, from here, can flow out into an empty upper zone of the battery pack.

As it is known, the battery pack is mounted on the vehicles in the area of the floorboard, with precautions such as to guarantee safety in the event of collisions and possible intrusion of objects from below. To this purpose, an empty space is generally provided below the battery modules to vertically space the latter apart from a wall that defines the bottom of the vehicle, towards the road surface.

In particular, said empty space spaces the bottom wall of the vehicle apart from a cooling system, which is normally provided for cooling the battery modules from below. This cooling system, indeed, is usually represented by a horizontal plate, which has a plurality of channels, where a heat exchange liquid flows, and is arranged in the area of the base of each battery module.

When dealing with these known solutions, there is a need to reduce dimensions in the vertical direction, while continuing to meet the safety requirements indicated above in relation to collisions and possible intrusions of objects from below.

In fact, the vertical dimensions of the known solutions described above are relatively large, since they consist of several addends, i.e.
the empty space provided above the bottom wall of the vehicle, for safety against collisions and intrusions from below,
the height needed for the horizontal cooling plate,
the typical height of the battery modules, and
the empty upper area of the battery pack, where any gases emitted by the battery cells can be vented.

In addition to reducing dimensions in the vertical direction, there is a further need to improve the efficiency of the cooling systems of known solutions. To this regard, known solutions with a horizontal cooling plate, although very simple, do not manage to remove heat in an optimal manner from the components arranged higher up in the battery modules and may require the use of suitable thermal conductors, which transfer heat to the cooling plate.

An example of a prismatic battery cell is described in Italian patent application 102024000016132 filed by the Applicant.

### DESCRIPTION OF THE INVENTION

The object of the invention is to provide a prismatic type battery cell, a corresponding battery pack and a road vehicle, which are at least partially free from the drawbacks described above and, at the same time, are simple and economic to be manufactured.

According to the invention, there are provided a prismatic type battery cell, a corresponding battery pack and a road vehicle as claimed in the independent claims attached hereto and, preferably, in any one of the dependent claims directly or indirectly depending on the independent claims.

The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figure 1 is a schematic plan view, with details left out for greater clarity, of a road vehicle comprising a battery pack according to an embodiment of the invention;
- figure 2 schematically shows an anode and a cathode of a battery cell according to the invention;
- figure 3 shows a plan view and a side section view, with details left out for greater clarity, of a cell part formed starting from the anode and cathode of figure 2;
- figure 4 is a schematic planar and side section view of a cell comprising the part of figure 3;
- figure 5 is a schematic front view of the cell of figure 4;
- figure 6 is a schematic perspective view of the cell of figures 4 and 5.

### DETAILED DESCRIPTION

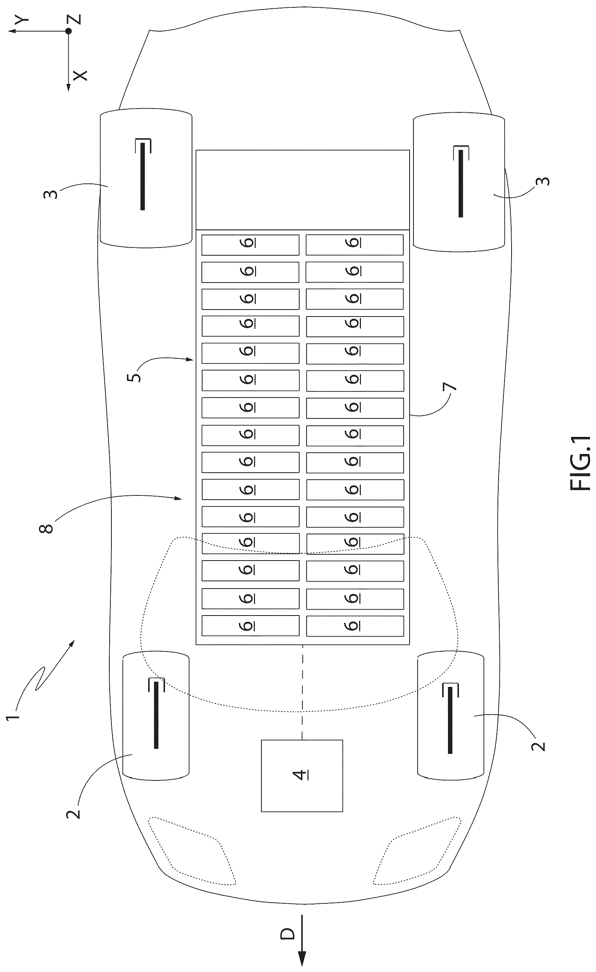

In figure 1, number 1 generically indicates, as a whole, a road vehicle provided with two front wheels 2 and two rear wheels 3, at least a pair (or all) of them receiving torque from an electric or hybrid powertrain system 4. The powertrain system 4 can be exclusively electric (namely, only comprising one or more electric motors) or hybrid (namely, comprising an internal combustion engine and at least one electric motor).

In the figures, the same numbers and the same reference letters indicate the same elements or components with the same function.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another, without for this reason going beyond the scope of protection of this patent application, as described hereinafter.

Hereinafter, expressions such as "at the top", "at the bottom", "at the front", "at the back" and others similar to them are used with reference to normal travel conditions of the vehicle 1 along the normal travel direction D.

As shown in the non-limiting embodiment of figure 1, it is further possible to define:
- a longitudinal axis X integral to the vehicle 1 and, in use, horizontal and parallel to a normal travel direction D of the vehicle 1;
- a transverse axis X integral to the vehicle 1 and, in use, horizontal and orthogonal to the axis X; and
- a vertical axis Z integral to the vehicle 1 and, in use, vertical and orthogonal to the axes X, Y.

The powertrain system 4 preferably comprises at least one electric machine, which is controlled by an AC/DC electronic power converter (namely, an "inverter") (of the known kind and not shown herein), which is connected to a vehicle battery pack 5.

The battery pack comprises a plurality of prismatic battery cells 6 as described herein.

The battery pack also comprises a support structure 7 configured to support and house the battery cells 6 (see figure 1). In detail, the support structure 7di is located under a vehicle passenger compartment 8.

The cell 6, as mentioned above, is a prismatic cell and, therefore, comprises a box-shaped metal case 9, inside which a stack 10 of electrodes is accommodated, preferably immersed in a respective electrolyte.

The box-shaped metal case 9, in particular made of aluminium, comprises, in turn, a first base wall 11 and a second base wall 12, opposite one another along a longitudinal axis L of the cell 6.

In detail, the box-shaped metal case 9 also comprises a side wall 13 provided with four faces, which joins the first base wall 11 to the second base wall 12 and defines, in combination with them, an inner space 14 inside the box-shaped metal case 9. In other words, the combination of the walls 11, 12 and 14 defines the box-like/prismatic or parallelepiped shape of the box-shaped case 9.

The cell 6 further comprises a first electrical pole 15, which comprises a first metal connector 16 electrically connected to the first base wall 11.

In addition, the cell 6 comprises a second electrical pole 17, which comprises a second metal connector 18 electrically connected to the second base wall 12.

Advantageously, though not in a limiting manner, the first electrical pole 15 is the negative pole of the cell 6, whereas the second electrical pole 17 is the positive pole of the cell 6.

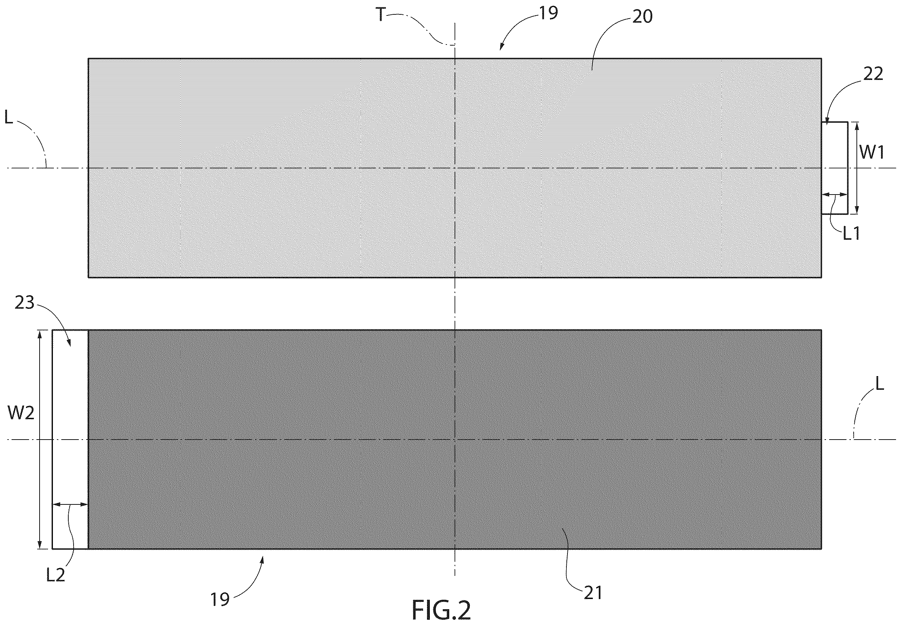

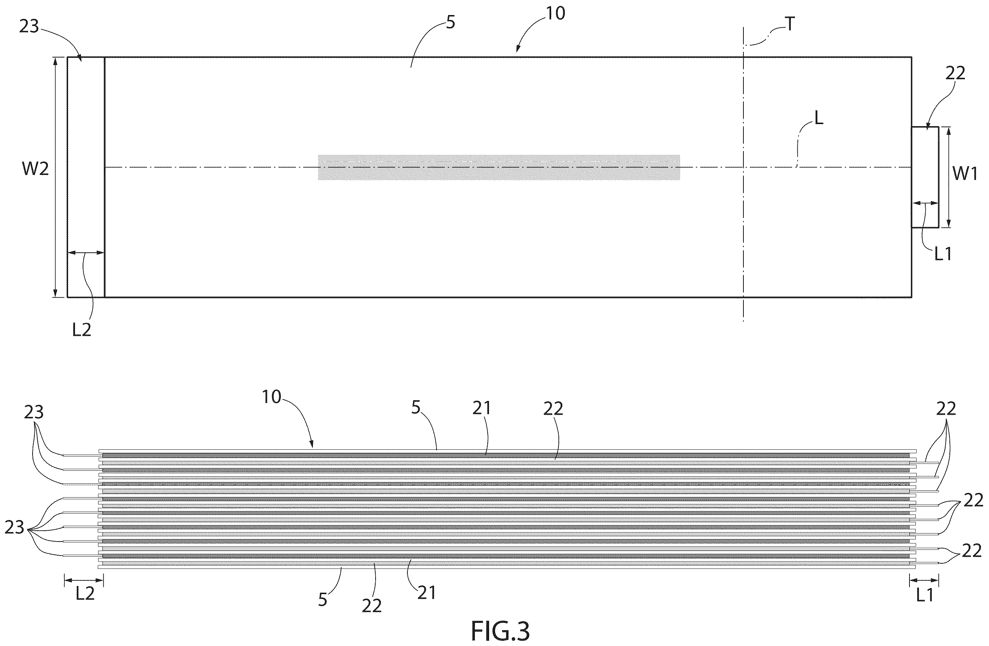

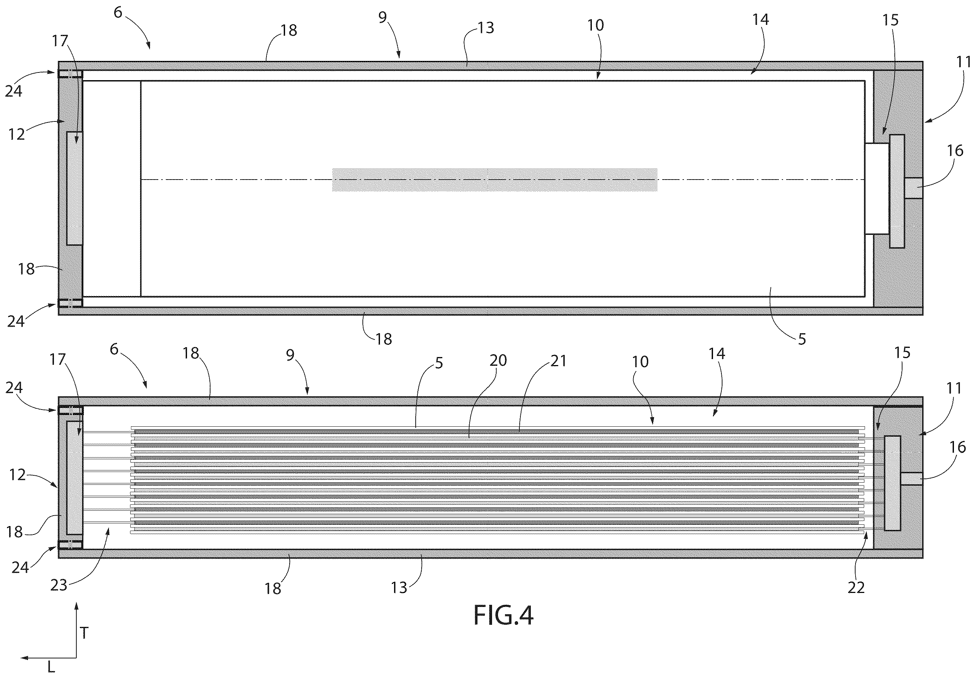

The cell 6 further comprises a stack 10, which is housed in the inner space 14 of the box-shaped metal case 9 and comprises a plurality of electrode plates 19 (commonly called blanks, individually shown in figure 2) alternating with each other and interspaced by foils 20 of separator material S (of a known type and, therefore, not further detailed below) so as to form a repetition of the electrode-separator-electrode-separator structure, as shown in figures 3 and 4.

In detail, the electrode plates 19 are alternately anode plates 20 and cathode plates 21, which extend lengthwise along the longitudinal axis L and widthwise along a transverse axis T, perpendicular to the longitudinal axis L, respectively.

The electrode plates 20 comprise, as it is known, a metal core (also known as a current collector) partially coated with active material usually in the form of compacted powder (at least as far as lithium ion batteries are concerned) comprising, for example, graphite, in the case of the cathode, and lithium and cobalt, in the case of the anode. The electrode plates usually are entirely coated, on both sides, with the active material, except for a side band conventionally called bare foil.

The anode plates 20 project, along the longitudinal L axis, first metal terminal elements 22 (the so-called tabs) toward the first base wall 11, which are electrically connected to it forming the first electrical pole 15.

Furthermore, the cathode plates 21 project, along the longitudinal L axis, in the opposite direction relative to the first metal terminal elements 22, second metal terminal elements 23 toward the second base wall 12, which are electrically connected to it forming the second electrical pole 17 having an opposite polarity relative to the first electrical pole 15.

The first metal terminal elements 22 and the second metal terminal elements 23 correspond to the aforementioned side band, namely to the bare foil or to tabs obtained from it using laser or mechanical shaping.

Advantageously, the second metal terminal elements 23 extend across the entire width of the cathode plates 21. In this way, the need to shape the terminal tabs is avoided. In addition, by increasing the width through which the electric current exiting the cell 6 can flow, the electrical resistance of the battery cell 6 is reduced, consequently improving, namely reducing, the relative heat generation. As a result, the complexity of the cell cooling system can also be reduced.

In particular, the first metal terminal elements 22 have a width W1 that is smaller than a width W2 of the second metal terminal elements 23 and the anode plates 20 from which they project.

Preferably, though not in a limiting manner, in order to facilitate the respective electrical connection, namely the (laser or ultrasonic) welding, to the second base wall 12, the length L1 of the first metal terminal elements 22 is smaller than the length L2 of the second metal terminal elements 23. In fact, this increased length facilitates contact with the second base wall 12, effectively enabling the elimination of those intermediate and bulky connection elements that are present in the cells of the prior art.

According to the preferred but non-limiting embodiment of figure 4, the second base wall 12 is electrically connected to the side wall 13, thus forming a second, positive, cup-shaped, electrical pole 17. On the contrary, at least part of the first base wall 11 is electrically insulated from the side wall 13. In this way, the first base wall 11, or at least the portion electrically insulated from the side wall 13, basically acts as the first negative pole 15 of the cell 6, whereas the combination of the side wall 13 and the second base wall 12 defines the second positive pole 17 of the prismatic cell 6.

To sum up, the second electrical pole 17 defines the positive terminal (hence, the second metal connector 18) of the cell 6 and comprises at least the second base wall 12 and the side wall 13, in particular, possibly also part of the first base wall 11. On the other hand, the first electrical pole 15 defines the negative terminal (hence, the first metal connector 16) and includes the part of the first base wall 11 electrically insulated from the side wall 13.

In this way, it is possible to place both the first 16 and the second connector 18 on the same side of the case 9, despite the fact that the poles 15 and 17 are on opposite sides of the stack 10. This conformation is particularly convenient when connecting the cell 6 to the rest of the electrical system of the road vehicle 1.

Preferably, but not in a limiting manner, the first base wall 11 and/or (especially) the second base wall 12 are directly (namely, without the interposition of intermediate connector elements) connected to the first metal terminal elements 22 and/or the second metal terminal elements 23, respectively. In this way, dimensions are optimized and the amount of active material, as well as the weight of the cell 6, are optimized.

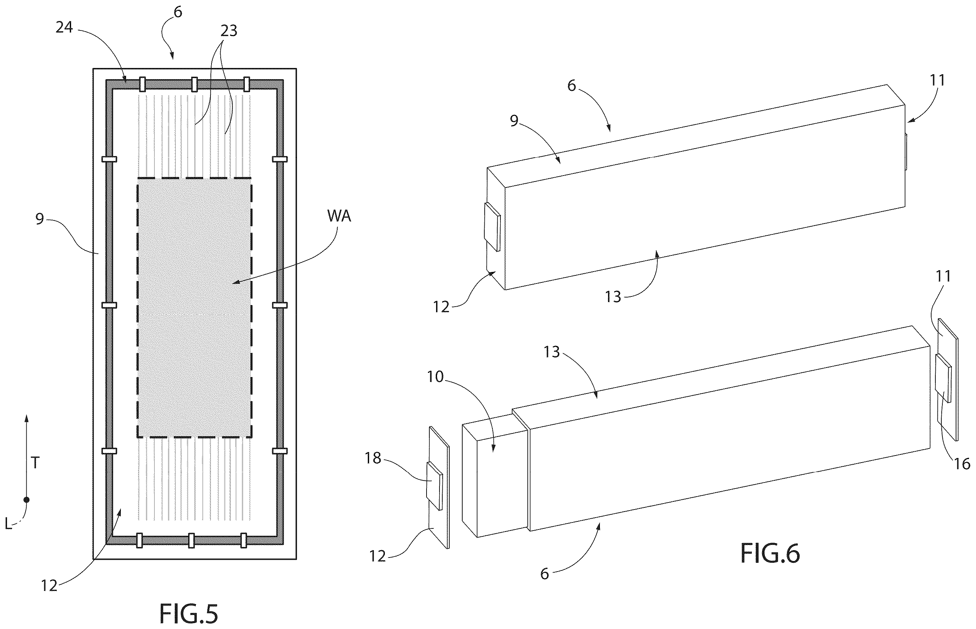

As shown in the non-limiting embodiment of figure 5, the electrical connection between the first base wall 11 or, especially, the second base wall 12 and the first metal terminal elements 22 or the second metal terminal elements 23, respectively, occurs in a welding area WA, in particular a rectangular one, located at the centre of and within the first base wall 11 or the second base wall 12.

In some preferred non-limiting cases, the second base wall 12 and the second metal terminal elements 23 are made of aluminium.

On the other hand, the first base wall 11 is preferably made of aluminium, but the first metal terminal elements 22 are made of copper.

In some preferred cases, the battery cell 6 comprises a venting system 24 which, upon exceeding a pressure inside the box-shaped metal case 9 above a predefined threshold value, is configured to allow gas to escape from the inside to the outside of the box-shaped metal case 9.

In particular, as shown in the embodiment of figure 5, the venting system 24 is located in the area of the first base wall 11 and/or (preferably) of the second base wall 12 and is configured to use the first base wall 11 and/or the second base wall 12 as a valve.

Advantageously, though not in a limiting manner, the venting system 24 is located in the area of the positive terminal of the cell 6, in particular it surrounds the second base wall 12.

According to some non-limiting embodiments, the venting system 24, in particular the second base wall 12, comprises:
- an outer conductor element;
- an insulating element;
- a conductive plate, in which the outer conductive element, the insulating element and the conductive plate are crimped together;
- a conductive rupture plate electrically connected and welded to the conductive plate.

In particular, the second electrical terminal elements 23 are electrically connected to the conductive rupture plate.

In other words, the venting system can be designed in a manner similar to that described in patent EP3475996B1 or to cell 4680 of known type, albeit cylindrical.

In other non-limiting cases, the venting system 24 comprises specific welds made, in particular with an oblong or concentric shape (in particular on the outer surface), on the second base wall 12.

Preferably, said welds are configured to define preferential breaking points of the second base wall 12, allowing the so-called venting operations to be carried out in the area of the perimeter of the second base wall 12.

In this way, the entire second base wall 12, namely the entire cover, is used as a venting valve. Furthermore, in this way, the energy density of the cell 6 can be maximized, allocating as much space as possible inside the box-shaped metal case 9 to active materials.

In some preferred non-limiting cases, the system 24 comprises a weld that defines at least one weakening point, in particular a line, of the second base wall 12. In particular, the weld (internally) follows the perimeter of the base wall 12.

Preferably, though not in a limiting manner, the predefined pressure value for the expulsion of gases from the inside of the case 9 is equal to or greater than 6 bar, in particular 9 bar, preferably 12 bar, in detail 15 bar.

By way of example, the electrode plates 20 can be rectangles with dimensions 160x100 mm, whereas the lengths L1 and L2 can be 12 mm and 18 mm, respectively.

Even though the invention described above relates to a specific embodiment, it should not be considered as limited to said embodiment, for its scope of protection also includes all those variants, changes or simplifications covered by the appended claims, such as for example a different type of storage systems, of material, etc.

The embodiments described herein can be combined with one another, without for this reason going beyond the scope of protection of the invention.

The vehicle and the method described above lead to many advantages.

First of all, the cell resistance and, therefore, the relative heat generation are reduced.

In addition, the cooling system can be simplified, improving the management of the heat increase inside the battery pack.

Finally, the energy and power intensity of the prismatic cell can be increased.

### LIST OF THE REFERENCE NUMBERS OF THE FIGURES

- 1: vehicle
- 2: front wheels
- 3: rear wheels
- 4: powertrain system
- 5: battery pack
- 6: battery cell
- 7: support structure
- 8: passenger compartment
- 9: box-shaped metal case
- 10: stack
- 11: first base wall
- 12: second base wall
- 13: side wall
- 14: inner space
- 15: first electrical pole
- 16: first metal connector
- 17: second electrical pole
- 18: second metal connector
- 19: electrode plates
- 20: anode plates
- 21: cathode plates
- 22: first terminal elements
- 23: second terminal elements
- 24: venting system
- X: axis
- Y: axis
- Z: axis
- L: longitudinal axis
- T: transverse axis
- L1: length
- L2: length
- W1: width
- W2: width
- WA: welding area

## Claims

1. Prismatic type battery cell (6) comprising:
- box-shaped metal case (9), which in turn comprises a first base wall (11) and a second base wall (12), opposed to each other along a longitudinal axis (L) of the cell; the box-shaped metal case (9) also comprising a side wall (13) provided with four faces, which connects the first base wall (11) to the second base wall (12) and defines, in combination with them, an inner space (14) inside the box-shaped metal case (9);
- a first electrical pole (15), which comprises a first metallic connector (16) electrically connected to the first base wall (11);
- a second electrical pole (17), which comprises a second metal connector (18) electrically connected to the second base wall (12);
- a stack (10), which is arranged in the inner space (14) of the box-shaped metal case (9) and comprising a plurality of electrode plates (19) alternating with each other and interspaced by separator material foils so as to form a repetition of an electrode-separator-electrode-separator structure;
wherein the electrode plates (19) are alternately anode plates (20) and cathode plates (21), which extend lengthwise along the longitudinal axis (L) and widthwise along a transverse axis (T), perpendicular to the longitudinal axis (L), respectively;
wherein the anode plates (20) project, along the longitudinal (L) axis, first metal terminal elements (22) toward the first base wall (11), which are electrically connected to it forming the first electrical pole (15);
wherein the cathode plates (21) project, along the longitudinal (L) axis, in the opposite direction to the first metal terminal elements (22), second metal terminal elements (23) toward the second base wall (12), which are electrically connected to it forming the second electrical pole (17), opposite to the first electrical pole (15);
wherein the second metal terminal elements (23) extend across the entire width of the cathode plates (21).

2. Battery cell (6) according to claim 1, wherein the first metal terminal elements (22) have a width (W1) less than the width (W2) of the second metal terminal elements (23) and the anode plates (20) from which they project.

3. Battery cell (6) according to claim 1 or 2, wherein the length (L1) of the first metal terminal elements (22) is less than the length (L2) of the second metal terminal elements (23).

4. Battery cell (6) according to any one of the preceding claims, wherein the second base wall (12) is electrically connected to the side wall (13), while at least part of the first base wall (11) is electrically insulated from the side wall (13).

5. Battery cell (6) according to claim 4, wherein the second electrical pole (17) defines the positive terminal of the cell and includes at least the second base wall (12) and the side wall (13), in particular also part of the first base wall (11).

6. Battery cell (6) according to claim 5, wherein the first electrical pole (15) defines the negative terminal and includes the part of the first base wall (11) electrically insulated from the side wall (13).

7. Battery cell (6) according to any one of the preceding claims, wherein the first base wall (11) and/or the second base wall (12) are respectively directly connected to the first metal terminal elements (22) and/or the second metal terminal elements (23).

8. Battery cell (6) according to any one of the preceding claims, wherein the electrical connection between the first base wall (11) or the second base wall (12) and respectively the first metallic terminal elements (22) or the second metallic terminal elements (23) occurs at a welding area, in particular rectangular, disposed centrally and internally to the first base wall (11) or the second base wall (12).

9. Battery cell (6) according to any one of the preceding claims, wherein the second base wall (12) and the second metal terminal elements (23) are made of aluminum.

10. Road vehicle (1) comprising:
- four wheels (2, 3), of which at least one pair of wheels (2, 3) is driving;
- an electric or hybrid powertrain system (4);
- a battery pack (5) comprising a plurality of battery cells (6) according to any one of the preceding claims;
the battery pack (5) comprising a support structure (7) supporting and housing said battery cells disposed inferiorly to a vehicle passenger compartment (8).
